# EUROPEAN PATENT SPECIFICATION

(11) **EP 3 226 505 B1**
(45) Date of publication and mention of the grant of the patent: **07.08.2019**
(21) Application number: 15865634.8
(22) Date of filing: 11.11.2015
(51) Int. Cl.: H04L 29/06, H04W 76/00, H04L 29/08

(54) **PUSH SERVICE IMPLEMENTATION METHOD AND DEVICE**
VERFAHREN UND VORRICHTUNG ZUR IMPLEMENTIERUNG EINES PUSHDIENSTES
PROCÉDÉ ET DISPOSITIF DE MISE EN OEUVRE DE SERVICE D'ENVOI

(30) Priority: 01.12.2014 CN 201410717864
(43) Date of publication of application: 04.10.2017
(73) Proprietor: Huawei Technologies Co., Ltd., Longgang District Shenzhen, Guangdong 518129 (CN)
(72) Inventor: XU, Yanan, Shenzhen Guangdong 518129 (CN)
(74) Representative: Körber, Martin Hans
(86) International application number: PCT/CN2015/094302
(87) International publication number: WO 2016/086760

(56) References cited:
- WO-A1-2009/087566
- CN-A- 101 087 269
- CN-A- 101 273 594
- CN-A- 102 487 491
- CN-A- 104 468 556
- US-A1- 2003 058 838
- US-A1- 2007 294 336
- US-B2- 8 441 944
- Anonymous: "Message Session Relay Protocol - Wikipedia, the free encyclopedia", , 28 October 2014 (2014-10-28), XP055418667, Retrieved from the Internet: URL:https://web.archive.org/web/2014102805 4638/https://en.wikipedia.org/wiki/Message _Session_Relay_Protocol [retrieved on 2017-10-24]

## Description

### TECHNICAL FIELD

The present invention relates to the communications field, and in particular, to a method for implementing a push service and a device.

### BACKGROUND

In a 2G/3G network, because of limitations of a core network and a bandwidth on a wireless side, a maximum bearer bandwidth of ringback tone media is only 64 K. An audio bearer bandwidth may usually reach 64 K. Therefore, in a process of playing a ringback tone, a ringback tone audio occupies the bandwidth exclusively and other data cannot be pushed. In this case, a ringback tone system cannot push other data except provide audio (or a video).

In an existing OTT (Over The Top) technology, a subscriber may push media content to a called party, and media content set for the called party is displayed on a called terminal. However, an OTT service is not performed in real time. After data connection of the called terminal is enabled, content pushed by the subscriber is downloaded locally, and when the subscriber calls the called party again, the downloaded content is read locally and is displayed on the called terminal. In addition, an existing terminal does not support dual standby either, and data connection is disabled in a call process. Therefore, in an existing voice process, content provided to a calling party and a called party is limited, and rich media content cannot be provided to a subscriber.

In a 4G (4^{th} Generation, the fourth generation) scenario, a protocol is improved, and a terminal supports data communication in a process of a voice call. However, at present, there is no solution in which rich media content can be provided to a subscriber in a voice call by means of data communication.

US 2003/058838 A1 discloses a system and a method for transmitting information via a call center SIP server. US 2007/294336 A1 discloses a method and apparatus turning a typical home telephone system into a platform for delivery of web based content and services. US 8 441 944 B1 discloses a system and method providing calling and called terminals with multimedia alerting signals such as a ringtone and ringback tone.

### SUMMARY

Embodiments of the present invention provide a method for implementing a push service and a device, so that an HTML (Hyper Text Mark-up Language, Hyper Text Mark-up Language) file can be pushed to a subscriber in a process of a voice call, and rich media content can be provided to the subscriber.

To achieve the foregoing objective, the technical solutions used in the embodiments of the present invention are as follows:
According to a first aspect, a method for implementing a push service is disclosed, including:
receiving, by a push server, an SIP (Session Initiation Protocol, Session Initiation Protocol) call request message sent by a calling terminal, and adding first Hypertext Markup Language HTML file information set by a calling party to the SIP call request message;
sending, by the push server, the SIP call request message to a service call session control function SCSCF of a called domain, wherein the SCSCF of the called domain forwards the SIP call request message carrying, to a called terminal, the first HTML file information;
establishing, by the push server, an MSRP-TCP (Transmission Control Protocol, Transmission Control Protocol) connection to the called terminal according to the MSRP (Message Session Replay Protocol, Message Session Replay Protocol);
receiving, by the push server, a first HTML file obtaining request sent by the called terminal, and obtaining a first HTML file according to the first HTML file information carried in the first HTML file obtaining request; and
sending, by the push server, the first HTML file to the called terminal by using the MSRP-TCP connection to the called terminal.

With reference to the first aspect, in a first possible implementation manner of the first aspect, the method further includes:
generating, by the push server, a media request message carrying second HTML file information set by a called party, and sending the media request message to the calling terminal;
establishing, by the push server, an MSRP-TCP connection to the calling terminal according to the MSRP;
receiving, by the push server, a second HTML file obtaining request sent by the calling terminal, and obtaining a second HTML file according to the second HTML file information carried in the second HTML file obtaining request; and
sending, by the push server, the second HTML file to the calling terminal by using the MSRP-TCP connection to the calling terminal.

With reference to the first possible implementation manner of the first aspect, in a second possible implementation manner of the first aspect,
if the called party is a ringback tone subscriber, before the establishing, by the push server, an MSRP-TCP connection to the calling terminal, the method further includes:
establishing, by the push server, an RTP (Real-time Transport Protocol, Real-time Transport Protocol) media bearer to the calling terminal, and playing an audio ringback tone and/or a video ringback tone for the calling terminal by using the RTP media bearer.

With reference to the first aspect, in a third possible implementation manner of the first aspect,
the first HTML file information added to the SIP call request message includes:
information which is in compliance with MSRP and instructs the called terminal to obtain information about the first HTML file; and
information which is in the compliance with MSRP and indicates information about a path of the first HTML file.

With reference to the first possible implementation manner of the first aspect, in a fourth possible implementation manner of the first aspect, the second HTML file information carried in the media request message includes: information which is in compliance with MSRP and instructs the calling terminal to obtain information about the second HTML file; and
information which is in with compliance MSRP and indicates information about a path of the second HTML file.

According to a second aspect, a push server is disclosed, including:
a receiving unit, configured to receive a Session Initiation Protocol SIP call request message sent by a calling terminal;
an information insertion unit, configured to add first Hypertext Markup Language HTML file information set by a calling party to the SIP call request message;
a sending unit, configured to send the SIP call request message to a service call session control function SCSCF of a called domain, so that the SCSCF of the called domain forwards, to a called terminal, the SIP call request message carrying the first HTML file information;
an establishment unit, configured to establish an MSRP-Transmission Control Protocol TCP connection to the called terminal according to the Message Session Replay Protocol MSRP; where
the receiving unit is further configured to receive a first HTML file obtaining request sent by the called terminal; and
an obtaining unit, configured to obtain a first HTML file according to the first HTML file information carried in the first HTML file obtaining request; where
the sending unit is further configured to send the first HTML file to the called terminal by using the MSRP-TCP connection to the called terminal.

With reference to the second aspect, in a first possible implementation manner of the second aspect,
the information insertion unit is configured to generate a media request message carrying second Hypertext Markup Language HTML file information set by a called party;
the sending unit is further configured to send the media request message to the calling terminal;
the establishment unit is further configured to establish an MSRP-TCP connection to the calling terminal according to the MSRP;
the receiving unit is further configured to receive a second HTML file obtaining request sent by the calling terminal;
the obtaining unit is further configured to obtain a second HTML file according to the second HTML file information carried in the second HTML file obtaining request; and
the sending unit is further configured to send the second HTML file to the calling terminal by using the MSRP-TCP connection to the calling terminal.

With reference to the first possible implementation manner of the second aspect, in a second possible implementation manner of the second aspect,
if the called party is a ringback tone subscriber, the push server further includes a playing unit, where
the establishment unit is further configured to: before the push server establishes the MSRP-TCP connection to the calling terminal, establish a Real-time Transport Protocol RTP media bearer to the calling terminal; and
the playing unit is configured to play an audio ringback tone and/or a video ringback tone for the calling terminal by using the RTP media bearer.

With reference to the second aspect, in a third possible implementation manner of the second aspect,
the first HTML file information added to the SIP call request message includes: information which is in compliance with MSRP and instructs the called terminal to obtain information about the first HTML file; and
information which is in compliance with MSRP and indicates information about a path of the first HTML file.

With reference to the first possible implementation manner of the second aspect, in a fourth possible implementation manner of the second aspect,
the second HTML file information carried in the media request message includes: information which is in compliance with MSRP and instructs the calling terminal to obtain information about the second HTML file; and
information which is in compliance with MSRP and indicates information about a path of the second HTML file.

The method for implementing a push service and the device provided in the present invention are based on the MSRP. A push server adds first HTML file information set by a calling party to an SIP call request message sent by a calling terminal to a called terminal, establishes an MSRP-TCP connection to the called terminal, and sends a first HTML file to the called terminal. The push server adds second HTML file information set by a called party to a media request message sent to the calling terminal, establishes an MSRP-TCP connection to the calling terminal, and sends the first HTML file to the calling terminal, so that in a process of a voice call, an HTML file may be pushed to a terminal of a subscriber, thereby providing rich media content to the subscriber.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is an architectural diagram of a push system according to the present invention;
FIG. 2 is a schematic flowchart of a method for implementing a push service according to Embodiment 1 of the present invention;
FIG. 3 is a schematic flowchart of a method for implementing a push service according to Embodiment 2 of the present invention;
FIG. 4 is a schematic flowchart of a method for implementing a push service according to Embodiment 3 of the present invention;
FIG. 5 is a schematic flowchart of an HTML file customization method according to Embodiment 3 of the present invention;
FIG. 6 is a structural block diagram of a push server according to Embodiment 4 of the present invention;
FIG. 7 is a structural block diagram of another push server according to Embodiment 4 of the present invention;
FIG. 8 is a structural block diagram of a push server according to Embodiment 5 of the present invention; and
FIG. 9 is a structural block diagram of another push server according to Embodiment 5 of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

In a 4G network, both a voice service and a data service use an IP bearer, and an operator configures a GBR (Guaranteed Bit Rate, guaranteed bit rate) policy on a wireless side. This policy guarantees, in a manner of reserving a resource or another manner, that data streams can all pass when bit rates of the data streams do not exceed a GBR, thereby providing a guarantee for data communication of a terminal in a voice process. The present invention is based on the 4G network and an MSRP, and provides a method for implementing a push service, which can push an HTML file to a subscriber in a process of a voice call, and provide rich media content to the subscriber.

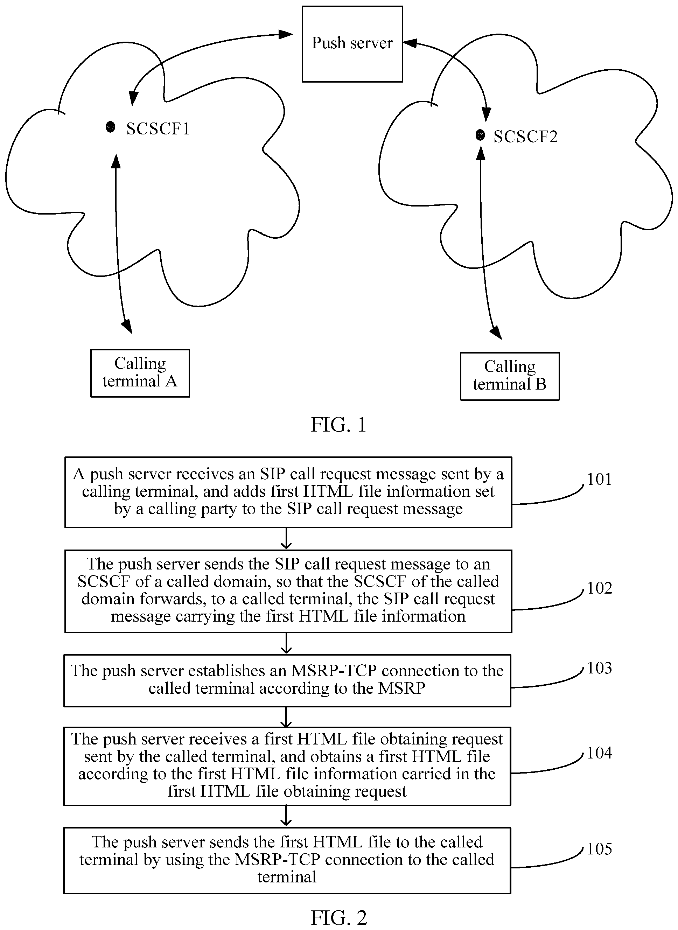

A push system provided in the present invention is described herein. As shown in FIG. 1, the push system includes: a calling terminal A, a called terminal B, an SCSCF1 (Service Call Session Control Function, service call session control function) of a calling domain, an SCSCF2 of a called domain, and a push server. Quantities of the calling terminals and the called terminals in the system are not limited herein. For convenience of understanding, in FIG. 1, only one calling terminal and one called terminal are included. It should be noted that if a ringback tone service is combined with a push service, and an HTML file is pushed to a subscriber during playing of a ringback tone, the push server may be a ringback tone platform & an MSRP server, where the ringback tone platform & the MSRP server can implement a ringback tone service and a service related to the MSRP.

### Embodiment 1

This embodiment of the present invention provides a method for implementing a push service. As shown in FIG. 2, the method includes the following steps:
101: A push server receives an SIP call request message sent by a calling terminal, and adds first HTML file information set by a calling party to the SIP call request message.

The SIP call request message carries an SDP (Session Description Protocol, Session Description Protocol) offer media initialization request. The SDP offer carries a media capability supported by the calling terminal, and a called party number. The first HTML file information includes: information which is in compliance with MSRP protocol format and is used to instruct a called terminal to obtain the first HTML file, and information which is in compliance with MSRP protocol format and is used to indicate a path of the first HTML file.

It should be noted that, the method for implementing a push service provided in the present invention is based on the MSRP. The MSRP, that is, an IETF RFC4975 document definition, is used to transmit an instant message in an established session, so as to complete information interaction. In the present invention, the calling terminal and the called terminal may be terminals supporting the MSRP, and support dual standby. The push server may be a ringback tone platform & an MSRP server and support a ringback tone service and the MSRP protocol, where the MSRP server can provide HTML file information which is in compliance with a requirement of the MSRP protocol format. Certainly, the push server may also be an MSRP server.

102: The push server sends the SIP call request message to an SCSCF of a called domain, so that the SCSCF of the called domain forwards, to a called terminal, the SIP call request message carrying the first HTML file information.

In this way, the called terminal may obtain the first HTML file information. Further, the called terminal starts an HTML file obtaining procedure according to the information which indicates the calling terminal obtains the second HTML file, and knows the path of the first HTML file according to the information indicating the path of the first HTML file.

103: The push server establishes an MSRP-TCP connection to the called terminal according to the MSRP.

104: The push server receives a first HTML file obtaining request sent by the called terminal, and obtains a first HTML file according to the first HTML file information carried in the first HTML file obtaining request.

105: The push server sends the first HTML file to the called terminal by using the MSRP-TCP connection to the called terminal.

It should be noted that the HTML file may be an HTML link. A touch hotspot may be built in an HTML page of the present invention. A terminal of a subscriber invokes an internal browser control to display the HTML file pushed by the push server on the terminal. The subscriber sends an http request by touching the hotspot. Comments may be made on a displayed page, to implement communication between the subscriber and the push server, thereby improving user experience.

In this embodiment of the present invention, not only rich media content may be provided to a called party, but also an HTML file may be pushed to a calling party. After the HTML file is pushed to the calling party, based on an embodiment shown in FIG. 2, the method may further include: generating, by the push server, a media request message carrying second HTML file information set by the called party, and sending the media request message to the calling terminal; establishing, by the push server, an MSRP-TCP connection to the calling terminal according to the MSRP; receiving, by the push server, a second HTML file obtaining request sent by the calling terminal, and obtaining a second HTML file according to the second HTML file information carried in the second HTML file obtaining request; and sending, by the push server, the second HTML file to the calling terminal by using the MSRP-TCP connection to the calling terminal.

In this embodiment of the present invention, the media request message generated by the push server may be generated after a call request reply message of the called terminal is received. The call request reply message may be first signaling returned by the called terminal. Specifically, in step 102, the push server sends the SIP call request message to the SCSCF of the called domain, and the SCSCF of the called domain receives the SIP call request message, and forwards the SIP call request message to the called terminal. After receiving the SIP call request message, the called terminal return a 180 message to the SCSCF of the called domain, and the SCSCF of the called domain forwards the 180 message to the push server. The generating, by the push server, a media request message may be specifically: adding the second HTML file information to the 180 message, so as to form the media request message.

The second HTML file information carried in the media request message includes: a compliance MSRP, used to instruct the calling terminal to obtain information about the second HTML file, where the compliance MSRP is used to indicate information about a path of the second HTML file.

In a preferred embodiment of the present invention, if the called party is a ringback tone subscriber, before the establishing, by the push server, an MSRP-TCP connection to the calling terminal, the method further includes:
establishing, by the push server, an RTP media bearer to the calling terminal, and playing an audio ringback tone and/or a video ringback tone for the calling terminal by using the RTP media bearer.

The method for implementing a push service provided in the present invention is based the MSRP. A push server adds first HTML file information set by a calling party to an SIP call request message sent by a calling terminal to a called terminal, establishes an MSRP-TCP connection to the called terminal, and sends a first HTML file to the called terminal. The push server adds second HTML file information set by a called party to a media request message sent to the calling terminal, establishes an MSRP-TCP connection to the calling terminal, establishes an MSRP-TCP connection to the calling terminal, and sends the first HTML file to the calling terminal, so that in a process of a voice call, a terminal of a subscriber may obtain the HTML file. By comparison, in the prior art, media content other than audio/a video cannot be pushed to the subscriber in a process of a voice call. However, by means of the method provided in the present invention, an HTML file is pushed to a subscriber in a process of a voice call, thereby providing rich media content to the subscriber.

### Embodiment 2

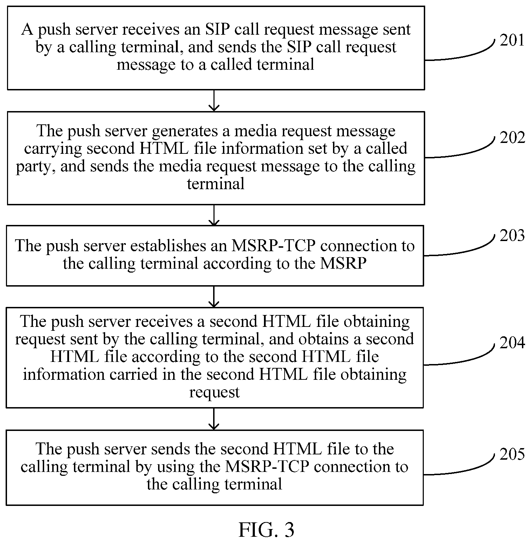

This embodiment of the present invention further provides another method for implementing a push service. As shown in FIG. 3, the method includes the following steps:
201: A push server receives an SIP call request message sent by a calling terminal, and sends the SIP call request message to a called terminal.

Specifically, the push server receives the SIP call request message sent by the calling terminal, and sends the SIP call request message to an SCSCF of a called domain, and the SCSCF of the called domain forwards the SIP call request message to the called terminal.

202: The push server generates a media request message carrying second HTML file information set by a called party, and sends the media request message to the calling terminal.

It should be noted that before step 202, the push server may receive a call request reply message returned by the called terminal. The push server may add the second HTML file information to the call request reply message, so as to form the media request message. Specifically, after receiving the SIP call request message, the called terminal may return a 180 message to the SCSCF of the called domain, and the SCSCF of the called domain forwards the 180 message to the push server. The push server may add the second HTML file information set by the called party to the 180 message, so as to form the media request message, and send the media request message to the calling terminal.

It should be noted that the second HTML file information carried in the media request message includes: information which is in compliance with MSRP protocol format and is used to instruct a called terminal to obtain the second HTML file, and information which is in compliance with MSRP protocol format and is used to indicate a path of the second HTML file.

203: The push server establishes an MSRP-TCP connection to the calling terminal according to the MSRP.

204: The push server receives a second HTML file obtaining request sent by the calling terminal, and obtains a second HTML file according to the second HTML file information carried in the second HTML file obtaining request.

Specifically, the calling terminal starts an HTML file obtaining procedure according to the information which indicates the calling terminal obtains the second HTML file, and sends the second HTML file obtaining request to the push server.

205: The push server sends the second HTML file to the calling terminal by using the MSRP-TCP connection to the calling terminal.

In a preferred embodiment of this embodiment, if a called subscriber is a ringback tone subscriber, before step 203, the push server further needs to establish an RTP media bearer to the calling terminal, and play an audio ringback tone and/or a video ringback tone for the calling terminal by using the RTP media bearer. Specifically, the called terminal receives the SIP call request message forwarded by the SCSCF of the called domain, and returns a 180 message to the SCSCF of the called domain. The SCSCF of the called domain forwards the 180 message to the push server. The push server forwards the 180 message to the calling terminal. After receiving the 180 message, the calling terminal returns a PRACK message to the push server. The push server receives the PRACK message and returns a 200OK message. It should be noted that in a case in which a called subscriber is a ringback tone subscriber, the push server adds a CAT A to the 180 message, and sends the 180 message to the calling terminal, so as to play a ringback tone to the calling terminal, instead of adding the second HTML file information to the 180 message to obtain the media request message. After receiving the PRACK message, the push server generates a media update request carrying the CAT A and the second HTML file information, and sends the media update request as the media request message to the calling terminal, so that the calling terminal updates the CAT A received previously.

The method for implementing a push service provided in the present invention is based on the MSRP. A push server adds first HTML file information set by a calling party to an SIP call request message sent by a calling terminal to a called terminal, establishes an MSRP-TCP connection to the called terminal, and sends a first HTML file to the called terminal. The push server generates a media request message carrying second HTML file information set by a called party, sends the media request message to the calling terminal, establishes an MSRP-TCP connection to the calling terminal, and sends the first HTML file to the calling terminal, so that in a process of a voice call, a terminal of a subscriber may obtain an HTML file, thereby providing rich media content to the subscriber in the process of the voice call.

### Embodiment 3

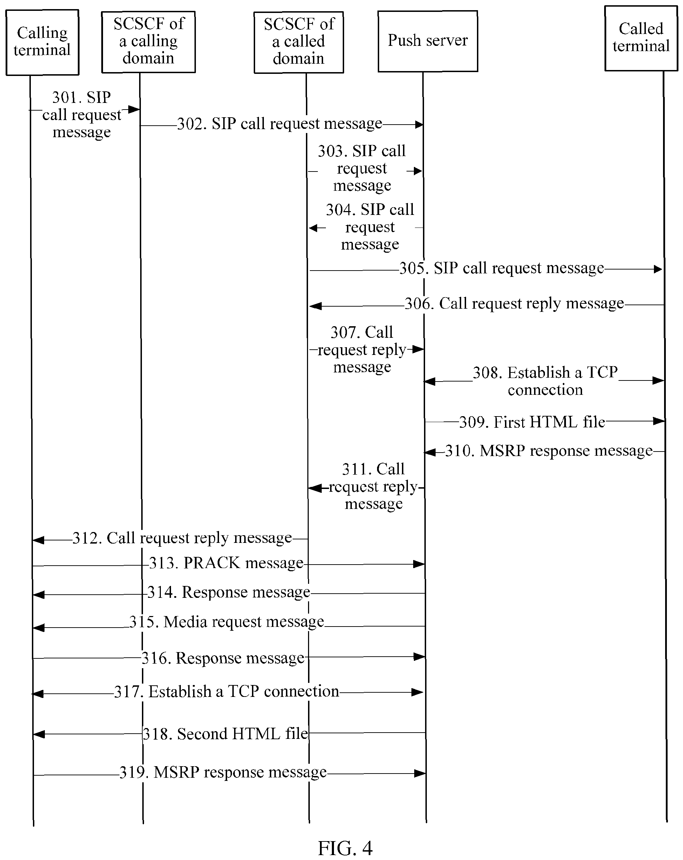

This embodiment of the present invention provides a method for implementing a push service. As shown in FIG. 4, the method includes the following steps:
301: A calling terminal sends an SIP call request message to an SCSCF of a calling domain.

The SIP call request message may be an invite message. The SIP call request message carries an SDP offer, and the SDP offer carries a media capability that can be supported by the calling terminal.

302: The SCSCF of the calling domain receives the SIP call request message, and sends the SIP call request message to the SCSCF of the called domain.

In specific implementation, after receiving the SIP call request message, the SCSCF of the calling domain first executes triggering of a related supplementary service and a related value-added service according to iFC (initial Filter Criteria, initial Filter Criteria) configuration information of a calling party. Subsequently, the SIP request message is sent to the SCSCF of the called domain. The iFC configuration information is used to describe when the received SIP message is to be further routed to a particular application server. The SCSCF is responsible for parsing the iFC configuration information, and routing the iFC configuration information to a specified application server.

303: The SCSCF of the called domain receives the SIP call request message, and forwards the SIP call request message to a push server.

In this embodiment of the present invention, a function of pushing an HTML file by the push server may be implemented by using an MSRP server. If a ringback tone service is combined with a push service, and an HTML file is pushed to a subscriber during playing of a ringback tone, the push server may be implemented by combining a ringback tone platform with the MSRP server.

Specifically, when the ringback tone service is combined with the push service, the SCSCF of the called domain determines, according to iFC configuration information of a called party, that the called party is a ringback tone subscriber. Therefore, the SIP call request message is sent to the push server, so as to play a ringback tone customized by the called party to the calling party.

304: The push server adds first HTML file information set by a calling party to the SIP call request message, and sends the SIP call request message to the SCSCF of the called domain.

The first HTML file information includes information which is in compliance with MSRP protocol format and is used to instruct a called terminal to obtain the first HTML file, and information which is in compliance with MSRP protocol format and is used to indicate a path of the first HTML file.

In specific implementation, the push server initiates a new call to the called party according to a called party number carried in the SIP call request message. Specifically, the push server may insert the first HTML file information set by the calling party into an SDP offer of the SIP call request message. In this case, the SIP message sent to the SCSCF of the called domain may also carry an MSRPa in addition to a media capability supported by the calling terminal. An example of the first HTML file information according to a format required by the MSRP protocol is as follows:

```
          v=0
          o=alice 2890844526 IN IP4 417.400.34.24
          s=
          c= IP4 417.400.34.24
          t=0 0
          m=message 7654 TCP/MSRP *
          i=This is my latest picture
          a=sendonly
          a=accept-types: message/cpim
          a=accept-wrapped-types: *
          a=path:mrsp://Atlanta.example.com:7654/jshA7we;tcp
          a=file-selector:name: "My cool picture.jpg"type:image/jpeg size:32349 hash:sha-
 1:72:24:5F:E8:65:3D:DA:F3:71:36:2F:86:D4:71:91:3E:E4:A2:CE:2E
          a=file-transfer-id:vBnG916bdberum2Ffeabr1fr3ExZMUrd
          a=file-disposition: attachment
          a=file-date:creation:"Mon, 15 May 4006 15:01:31 +0400"
          a=file-icon:cid:id2@alicepc.example.com
          a=file-range:1-32349
```

The push server instructs, by using the foregoing code, a called terminal and a calling terminal to obtain an HTML file.

The foregoing code includes basic information needed by the push server to establish a channel. The basic information includes information "type" used to indicate a type of a file, information "size" indicating a size of the file, information "file-date" indicating a time when the file is created, and the like.

305: The SCSCF of the called domain receives the SIP call request message, and sends the SIP call request message to the called terminal.

In specific implementation, after receiving the SIP call request message sent by the push server, the SCSCF of the called domain routes the message to the called terminal.

306: The called terminal receives the SIP call request message, obtains the first HTML file information from the SIP call request message, and returns a call request reply message to the SCSCF of the called domain.

The call request reply message may be a 180 message. The 180 message carries an SDP answer given for an SDP offer in the SIP call request message.

The called terminal starts an HTML file obtaining procedure according to the information which indicates the called terminal obtains the first HTML file, and obtains the information that is carried in the SIP call request message and that is about the path of the first HTML file.

307: The SCSCF of the called domain receives the call request reply message, and sends the call request reply message to the push server.

308: The push server establishes an MSRP-TCP connection to the called terminal according to the MSRP.

309: The push server sends a first HTML file to the called terminal by using the MSRP-TCP connection to the called terminal.

Specifically, because in step 306, the called terminal obtains the first HTML file information, the called terminal may send a first HTML file obtaining request to the push server according to the information about the path of the first HTML file in the first HTML file information, where the first HTML file obtaining request carries the information about the path of the first HTML file. The push server receives the first HTML file obtaining request, obtains the first HTML file according to the information about the path of the first HTML file, and sends the first HTML file to the called terminal.

310: The called terminal returns an MSRP response message to the push server.

The MSRP response message is an MSRP 200 OK message.

311: The push server forwards the call request reply message to the SCSCF of the called domain.

Specifically, the call request reply message may be a 180 message. If the called party is a ringback tone subscriber, the 180 message further carries a CAT (Customized Alerting Tone) A, to show that the called party is a ringback tone subscriber. It should be noted that after this step, the 180 message no longer carries the SDP offer & the MSRPa that are described in 306 and 307.

312: The SCSCF of the called domain forwards the call request reply message to the calling terminal.

Specifically, the SCSCF of the called domain first needs to forward the 180 message to the SCSCF of the calling domain, and then the SCSCF of the calling domain forwards the 180 message to the calling terminal.

313: The calling terminal returns a PRACK (Provisional Acknowledgement, provisional acknowledgement) message to the push server.

In specific implementation, the calling terminal first sends the PRACK message to the SCSCF of the calling domain, the SCSCF of the calling domain forwards the PRACK message to the SCSCF of the called domain, and then the SCSCF of the called domain forwards the PRACK message to the push server.

314: The push server returns a response message to the calling terminal.

The response message is a 200 OK message.

315: The push server sends a media request message to the calling terminal.

The media request message carries the second HTML file information set by a called party.

In this embodiment, when the called party is a ringback tone subscriber, the media request message may be a media update request, used to instruct the calling terminal to update a CAT A received previously into the CAT A and the second HTML file information.

316: The calling terminal returns the response message to the push server.

The response message is a 200 OK message.

317: The push server establishes an MSRP-TCP connection to the calling terminal according to the MSRP.

318: The push server sends the second HTML file to the calling terminal by using the MSRP-TCP connection to the calling terminal.

Specifically, because in step 312, the calling terminal receives the call request reply message, the calling terminal sends a second HTML file obtaining request to the push server according to an indication in the call request message. The push server receives the second HTML file obtaining request, obtains the second HTML file according to the second HTML file information carried in the second HTML file obtaining request, and sends the second HTML file to the calling terminal.

319: The calling terminal returns the MSRP response message to the push server.

The MSRP response message is an MSRP 200 OK message.

It should be noted that if the called party is a ringback tone subscriber, the call request reply message in steps 311 and 312 of this embodiment may carry a CAT_A, the media request message in step 315 may also carry a CAT_A, and the 200 OK message in step 316 may also carry a CAT_A.

The method for implementing a push service and the device provided in the present invention are based on the MSRP. A push server adds first HTML file information set by a calling party to an SIP call request message sent by a calling terminal to a called terminal, establishes an MSRP-TCP connection to the called terminal, and sends a first HTML file to the called terminal. The push server adds second HTML file information set by a called party to a media request message sent to the calling terminal, establishes an MSRP-TCP connection to the calling terminal, and sends the first HTML file to the calling terminal, so that in a process of a voice call, a terminal of a subscriber may obtain an HTML file, thereby providing rich media content to the subscriber.

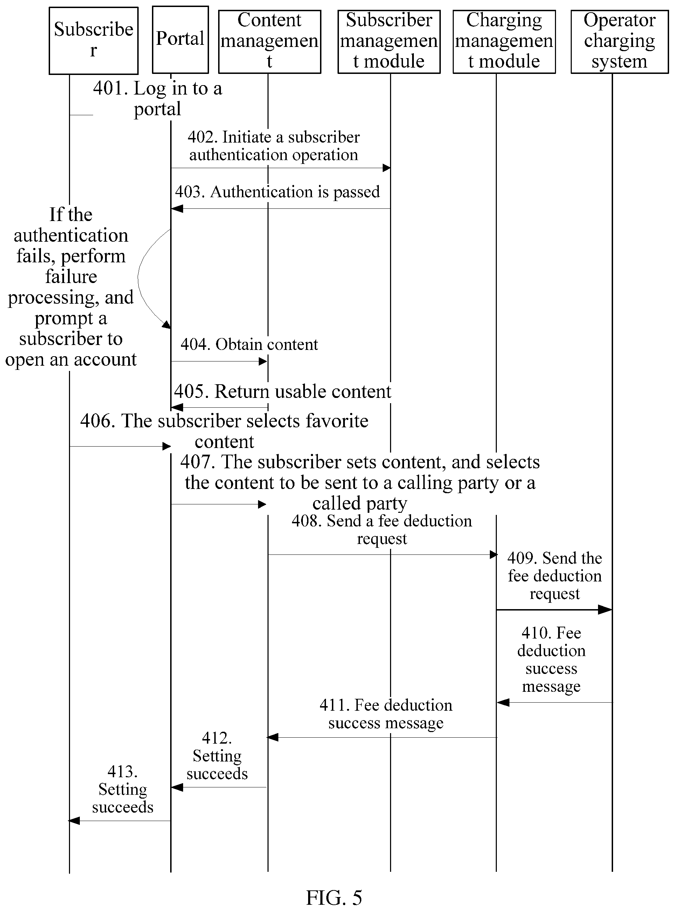

This embodiment of the present invention further provides an HTML file customization method. As shown in FIG. 5, the method includes the following steps:
401: A subscriber logs in to a web portal, and browses media content on the web portal.
402: A portal system initiates subscriber authentication to authentication information of a subscriber management module.
403: The subscriber management module sends an authentication success message to a portal.
404: After authentication succeeds, the portal system obtains content from a content management module.

If the authentication fails, the portal performs failure processing, and prompts the subscriber to open an account.

405: The content management module returns available content to the portal.

406. The subscriber selects favorite content.

407. The subscriber initiates an operation request of setting the content, and selects to perform sending to a calling party or a called party.

In specific implementation, the portal system sends the foregoing operation request to the content management module.

408: After receiving the foregoing operation request, the content management module sends a fee deduction request to a charging management module.

409: The charging management module sends the fee deduction request to an operator charging system.

410: The charging management module receives a fee deduction success message fed back by the operator charging system.

411: The charging management module sends the foregoing fee deduction success message to the content management module.

412: The content management module receives the foregoing fee deduction success message, and sends a setting success message to the portal system.

413: The portal system receives the foregoing fee deduction success message, and notifies the subscriber of a setting success.

According to the HTML file customization method provided in this embodiment of the present invention, a subscriber logs in to a web portal to customize an HTML for a calling party or a called party, and then a charging management module performs corresponding fee deduction, so that during playing of a ringback tone to the calling party, both the calling party and the called party can obtain an HTML file customized by the other party, so as to make content of a ringback tone system rich. In addition, the subscriber may send information such as a content comment to the ringback tone system by touching an HTML link, and the subscriber interacts with the ringback tone system, thereby improving user experience of a ringback tone service.

### Embodiment 4

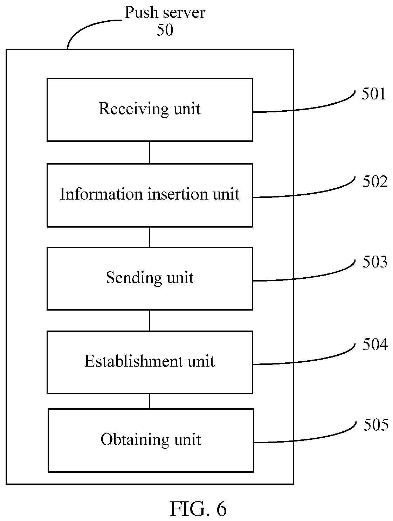

This embodiment of the present invention provides a push server 50, as shown in FIG. 6, including: a receiving unit 501, an information insertion unit 502, a sending unit 503, an establishment unit 504, and an obtaining unit 505.

The receiving unit 501 is configured to receive an SIP call request message sent by a calling terminal.

The information insertion unit 502 is configured to add first HTML file information of the calling terminal to the SIP call request message.

The sending unit 503 is configured to send the SIP call request message to a service call session control function SCSCF of a called domain, so that the SCSCF of the called domain forwards, to a called terminal, the SIP call request message carrying the first HTML file information.

The establishment unit 504 is configured to establish an MSRP-TCP connection to the called terminal according to the MSRP.

The receiving unit 501 is further configured to receive a first HTML file obtaining request sent by the called terminal.

The obtaining unit 505 is configured to obtain a first HTML file according to the first HTML file information carried in the first HTML file obtaining request.

The sending unit 503 is further configured to send the first HTML file to the called terminal by using the MSRP-TCP connection to the called terminal.

The receiving unit 501 is configured to receive a call request reply message sent by the called terminal. The call request reply message may be first signaling returned by the called terminal.

The information insertion unit 502 is further configured to generate a media request message carrying second HTML file information set by a called party.

The sending unit 503 is further configured to send the media request message to the calling terminal.

The establishment unit 504 is further configured to establish an MSRP-TCP connection to the calling terminal according to the MSRP.

The receiving unit 501 is further configured to receive a second HTML file obtaining request sent by the calling terminal.

The obtaining unit 505 is further configured to obtain a second HTML file according to the second HTML file information carried in the second HTML file obtaining request.

The sending unit 503 is further configured to send the second HTML file to the calling terminal by using the MSRP-TCP connection to the calling terminal.

If the called party is a ringback tone subscriber, the push server 50 further includes a playing unit.

The establishment unit 504 is further configured to: before the push server establishes the MSRP-TCP connection to the calling terminal, establish an RTP media bearer to the calling terminal.

The playing unit is configured to play an audio ringback tone and/or a video ringback tone for the calling terminal by using the RTP media bearer.

It should be noted that the first HTML file information added to the SIP call request message includes:
information which is in compliance with MSRP protocol format and is used to instruct a called terminal to obtain the first HTML file, and information which is in compliance with MSRP protocol format and is used to indicate a path of the first HTML file.

The second HTML file information carried in the media request message includes: information which is in compliance with MSRP protocol format and is used to instruct a called terminal to obtain the second HTML file, and information which is in compliance with MSRP protocol format and is used to indicate a path of the second HTML file.

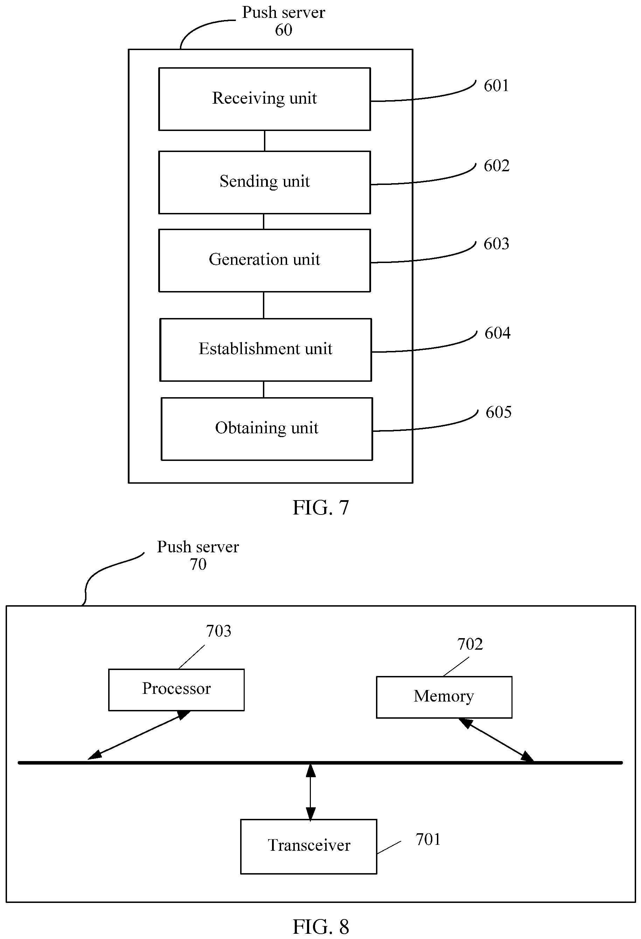

This embodiment of the present invention further provides a push server 60, as shown in FIG. 7, including: a receiving unit 601, a sending unit 602, a generation unit 603, an establishment unit 604, and an obtaining unit 605.

The receiving unit 601 is configured to receive a Session Initiation Protocol SIP call request message sent by a calling terminal.

The sending unit 602 is configured to send the SIP call request message to a called terminal.

The generation unit 603 is configured to generate a media request message carrying second HTML file information set by a called party.

The sending unit 602 is further configured to send the media request message to the calling terminal.

The establishment unit 604 is configured to establish an MSRP-TCP connection to the calling terminal according to the Message Session Replay Protocol MSRP.

The receiving unit 601 is further configured to receive a second HTML file obtaining request sent by the calling terminal.

The obtaining unit 605 is configured to obtain a second HTML file according to the second HTML file information carried in the second HTML file obtaining request.

The sending unit 602 is configured to send the second HTML file to the calling terminal by using the MSRP-TCP connection to the calling terminal.

If the called party is a ringback tone subscriber, the push server 60 further includes a playing unit. The establishment unit 604 is further configured to establish an RTP media bearer to the calling terminal.

The playing unit is configured to play an audio ringback tone and/or a video ringback tone for the calling terminal by using the RTP media bearer.

It should be noted that the second HTML file information carried in the media request message includes: information which is in compliance with MSRP protocol format and is used to instruct a called terminal to obtain the second HTML file, and information which is in compliance with MSRP protocol format and is used to indicate a path of the second HTML file.

The device provided in the present invention is based on the MSRP. The push server adds first HTML file information set by a calling party to an SIP call request message sent by a calling terminal to a called terminal, establishes an MSRP-TCP connection to the called terminal, and sends a first HTML file to the called terminal. The push server adds second HTML file information set by the called party to a media request message sent to the calling terminal, establishes an MSRP-TCP connection to the calling terminal, and sends the first HTML file to the calling terminal, so that in a process of a voice call, a terminal of a subscriber may obtain an HTML file. In comparison, in the prior art, media content other than audio/a video cannot be pushed to a subscriber in a process of a voice call. However, by means of the device provided in the present invention, an HTML file is pushed to a subscriber in a process of a voice call, thereby providing rich media content to the subscriber.

### Embodiment 5

This embodiment of the present invention provides a push server 70, as shown in FIG. 8, including: a transceiver 701, a memory 702, and a processor 703. The memory 702 stores a group of program code, and the processor 703 is configured to invoke the program code stored in the memory 702 to execute the following operations:
The transceiver 701 is configured to receive an SIP call request message sent by a calling terminal.

The processor 703 is configured to add first HTML file information set by a calling party to the SIP call request message.

The transceiver 701 is configured to send the SIP call request message to a service call session control function SCSCF of a called domain, so that the SCSCF of the called domain forwards, to a called terminal, the SIP call request message carrying the first HTML file information.

The processor 703 is configured to establish an MSRP-TCP connection to the called terminal according to the MSRP.

The transceiver 701 is further configured to receive a first HTML file obtaining request sent by the called terminal.

The processor 703 is configured to obtain a first HTML file according to the first HTML file information carried in the first HTML file obtaining request.

The transceiver 701 is further configured to send the first HTML file to the called terminal by using the MSRP-TCP connection to the called terminal.

The transceiver 701 is configured to receive a call request reply message sent by the called terminal. The call request message is first signaling returned by the called terminal.

The processor 703 is further configured to generate a media request message carrying second HTML file information set by a called party.

The transceiver 701 is further configured to send the media request message to the calling terminal.

The processor 703 is further configured to establish an MSRP-TCP connection to the calling terminal according to the MSRP.

The transceiver 701 is further configured to receive a second HTML file obtaining request sent by the calling terminal.

The processor 703 is further configured to obtain a second HTML file according to the second HTML file information carried in the second HTML file obtaining request.

The transceiver 701 is further configured to send the second HTML file to the calling terminal by using the MSRP-TCP connection to the calling terminal.

If the called party is a ringback tone subscriber, the processor 703 is further configured to: before the push server establishes the MSRP-TCP connection to the calling terminal, establish an RTP media bearer to the calling terminal.

The transceiver 701 is configured to send an audio ringback tone and/or a video ringback tone for the calling terminal by using the RTP media bearer.

It should be noted that the first HTML file information added to the SIP call request message includes:
information which is in compliance with MSRP protocol format and is used to instruct a called terminal to obtain the first HTML file, and information which is in compliance with MSRP protocol format and is used to indicate a path of the first HTML file.

The second HTML file information carried in the media request message includes: information which is in compliance with MSRP protocol format and is used to instruct a called terminal to obtain the second HTML file, and information which is in compliance with MSRP protocol format and is used to indicate a path of the second HTML file.

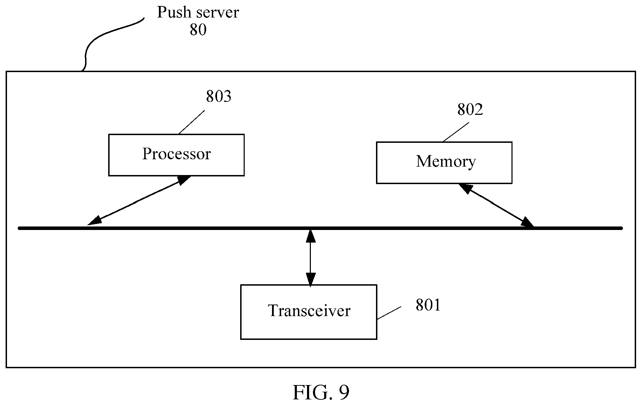

This embodiment of the present invention further provides a push server 80, as shown in FIG. 9, including: a transceiver 801, a memory 802, and a processor 803. The memory 802 stores a group of program code, and the processor 803 is configured to invoke the program code stored in the memory 802 to execute the following operations:
The transceiver 801 is configured to receive a Session Initiation Protocol SIP call request message sent by a calling terminal.

The transceiver 801 is configured to send the SIP call request message to a called terminal.

The processor 803 is configured to generate a media request message carrying second HTML file information set by a called party.

The transceiver 801 is further configured to send the media request message to the calling terminal.

The processor 803 is configured to establish an MSRP-TCP connection to the calling terminal according to the Message Session Replay Protocol MSRP.

The transceiver 801 is further configured to receive a second HTML file obtaining request sent by the calling terminal.

The processor 803 is configured to obtain a second HTML file according to the second HTML file information carried in the second HTML file obtaining request.

The transceiver 801 is configured to send the second HTML file to the calling terminal by using the MSRP-TCP connection to the calling terminal.

If the called party is a ringback tone subscriber, the processor 803 is further configured to establish an RTP media bearer to the calling terminal.

The transceiver 801 is configured to play an audio ringback tone and/or a video ringback tone for the calling terminal by using the RTP media bearer.

It should be noted that the second HTML file information carried in the media request message includes: information which is in compliance with MSRP protocol format and is used to instruct a called terminal to obtain the second HTML file, and information which is in compliance with MSRP protocol format and is used to indicate a path of the second HTML file.

The push service device provided in the present invention is based on the MSRP. The push server adds first HTML file information set by a calling party to an SIP call request message sent by a calling terminal to a called terminal, establishes an MSRP-TCP connection to the called terminal, and sends a first HTML file to the called terminal. The push server adds second HTML file information set by the called party to a media request message sent to the calling terminal, establishes an MSRP-TCP connection to the calling terminal, and sends the first HTML file to the calling terminal, so that in a process of a voice call, a terminal of a subscriber may obtain an HTML file, thereby providing rich media content to the subscriber.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for implementing a push service, comprising:
receiving (101), by a push server, a Session Initiation Protocol ,SIP, call request message sent by a calling terminal, and adding first Hypertext Markup Language ,HTML, file information set by a calling party to the SIP call request message;
sending (102), by the push server, the SIP call request message to a service call session control function ,SCSCF, of a called domain, wherein the SCSCF of the called domain forwards, to a called terminal, the SIP call request message carrying the first HTML file information;
establishing (103), by the push server, an MSRP-Transmission Control Protocol ,TCP, connection to the called terminal according to the Message Session Replay Protocol ,MSRP;
receiving (104), by the push server, a first HTML file obtaining request sent by the called terminal, and obtaining a first HTML file according to the first HTML file information carried in the first HTML file obtaining request; and
sending (105), by the push server, the first HTML file to the called terminal by using the MSRP-TCP connection to the called terminal.

2. The method according to claim 1, wherein the method further comprises:
generating (202), by the push server, a media request message carrying second HTML file information set by a called party, and sending the media request message to the calling terminal;
establishing (203), by the push server, an MSRP-TCP connection to the calling terminal according to the MSRP;
receiving (204), by the push server, a second HTML file obtaining request sent by the calling terminal, and obtaining a second HTML file according to the second HTML file information carried in the second HTML file obtaining request; and
sending (205), by the push server, the second HTML file to the calling terminal by using the MSRP-TCP connection to the calling terminal.

3. The method according to claim 2, wherein if the called party is a ringback tone subscriber, before the establishing, by the push server, an MSRP-TCP connection to the calling terminal, the method further comprises:
establishing, by the push server, a Real-time Transport Protocol ,RTP, media bearer to the calling terminal, and playing an audio ringback tone and/or a video ringback tone for the calling terminal by using the RTP media bearer.

4. The method according to claim 1, wherein the first HTML file information added to the SIP call request message comprises: information which is in compliance with MSRP and instructs the called terminal to obtain information about the first HTML file; and
information which is in the compliance with MSRP and indicates information about a path of the first HTML file.

5. The method according to claim 2, wherein the second HTML file information carried in the media request message comprises: information which is in compliance with MSRP and instructs the calling terminal to obtain information about the second HTML file; and
information which is in the compliance with MSRP and indicates information about a path of the second HTML file.

6. A push server (50), comprising:
a receiving unit (501), configured to receive a Session Initiation Protocol SIP call request message sent by a calling terminal;
an information insertion unit (502), configured to add first Hypertext Markup Language HTML file information set by a calling party to the SIP call request message;
a sending unit (503), configured to send the SIP call request message to a service call session control function SCSCF of a called domain, wherein the SCSCF of the called domain forwards, to a called terminal, the SIP call request message carrying the first HTML file information;
an establishment unit (504), configured to establish an MSRP-Transmission Control Protocol ,TCP, connection to the called terminal according to the Message Session Replay Protocol ,MSRP; wherein
the receiving unit (501) is further configured to receive a first HTML file obtaining request sent by the called terminal; and
an obtaining unit (505), configured to obtain a first HTML file according to the first HTML file information carried in the first HTML file obtaining request; wherein
the sending unit (503) is further configured to send the first HTML file to the called terminal by using the MSRP-TCP connection to the called terminal.

7. The push server (50) according to claim 6, wherein
the information insertion unit is further configured to generate a media request message carrying second HTML file information set by a called party;
the sending unit is further configured to send the media request message to the calling terminal;
the establishment unit is further configured to establish an MSRP-TCP connection to the calling terminal according to the MSRP;
the receiving unit is further configured to receive a second HTML file obtaining request sent by the calling terminal;
the obtaining unit is further configured to obtain a second HTML file according to the second HTML file information carried in the second HTML file obtaining request; and
the sending unit is further configured to send the second HTML file to the calling terminal by using the MSRP-TCP connection to the calling terminal.

8. The push server according to claim 7, if the called party is a ringback tone subscriber, further comprising a playing unit, wherein
the establishment unit is further configured to: before the push server establishes the MSRP-TCP connection to the calling terminal, establish a Real-time Transport Protocol ,RTP, media bearer to the calling terminal; and
the playing unit is configured to play an audio ringback tone and/or a video ringback tone for the calling terminal by using the RTP media bearer.

9. The push server according to claim 6, wherein the first HTML file information added to the SIP call request message comprises: information which is in compliance with MSRP and instructs the called terminal to obtain information about the first HTML file; and
information which is in compliance with MSRP and indicates information about a path of the first HTML file.

10. The push server according to claim 7, the second HTML file information carried in the media request message comprises: information which is in compliance with MSRP and instructs the calling terminal to obtain information about the second HTML file; and
information which is in compliance with MSRP and indicates information about a path of the second HTML file.

## Patentansprüche

1. Verfahren zum Implementieren eines Push-Dienstes, umfassend:
Empfangen (101), durch einen Push-Server, einer von einem anrufenden Endgerät gesandten Sitzungseinleitungsprotokoll- bzw. SIP-Anrufanforderungsnachricht und Hinzufügen von durch eine anrufende Partei eingestellten Informationen über eine erste Hypertext-Auszeichnungssprachen- bzw. HTML-Datei zu der SIP-Anrufanforderungsnachricht;
Senden (102), durch den Push-Server, der SIP-Anrufanforderungsnachricht an eine Dienstanrufsitzung-Steuerfunktion, SCSCF, einer angerufenen Domäne, wobei die SCSCF der angerufenen Domäne die SIP-Anrufanforderungsnachricht, die die Informationen über die erste HTML-Datei trägt, an ein angerufenes Endgerät weiterleitet;
Einrichten (103), durch den Push-Server, einer MSRP-Übertragungssteuerprotokoll- bzw. -TCP-Verbindung zu dem angerufenen Endgerät gemäß einem Nachrichtensitzung-Wiederholungprotokoll, MSRP;
Empfangen (104), durch den Push-Server, einer Anforderung zum Erlangen einer ersten HTML-Datei, gesandt durch das angerufene Endgerät, und Erlangen einer ersten HTML-Datei gemäß den in der Anforderung zum Erlangen einer ersten HTML-Datei getragenen Informationen über die erste HTML-Datei; und
Senden (105), durch den Push-Server, der ersten HTML-Datei an das angerufene Endgerät unter Verwendung der MSRP-TCP-Verbindung zu dem angerufenen Endgerät.

2. Verfahren nach Anspruch 1, wobei das Verfahren ferner umfasst:
Erzeugen (202), durch den Push-Server, einer Medienanforderungsnachricht, die durch eine angerufene Partei eingestellte Informationen über die zweite HTML-Datei trägt, und Senden der Medienanforderungsnachricht an das anrufende Endgerät;
Einrichten (203), durch den Push-Server, einer MSRP-TCP-Verbindung zu dem anrufenden Endgerät gemäß dem MSRP;
Empfangen (204), durch den Push-Server, einer Anforderung zum Erlangen einer zweiten HTML-Datei, gesandt durch das anrufende Endgerät, und Erlangen einer zweiten HTML-Datei gemäß den in der Anforderung zum Erlangen einer zweiten HTML-Datei getragenen Informationen über die zweite HTML-Datei; und
Senden (205), durch den Push-Server, der zweiten HTML-Datei an das anrufende Endgerät unter Verwendung der MSRP-TCP-Verbindung zu dem anrufenden Endgerät.

3. Verfahren nach Anspruch 2, wobei, wenn die angerufene Partei ein Freizeichenton-Teilnehmer ist, das Verfahren vor dem Einrichten, durch den Push-Server, einer MSRP-TCP-Verbindung zu dem anrufenden Endgerät ferner umfasst:
Einrichten, durch den Push-Server, eines Echtzeittransportprotokoll- bzw. RTP-Medienträgers zu dem anrufenden Endgerät und Wiedergeben eines Audio-Freizeichentons und/oder eines Video-Freizeichentons für das anrufende Endgerät unter Verwendung des RTP-Medienträgers.

4. Verfahren nach Anspruch 1, wobei die zu der SIP-Anrufanforderungsnachricht hinzugefügten Informationen über die erste HTML-Datei umfassen: Informationen, die dem MSRP entsprechen und das angerufene Endgerät anweisen, Informationen über die erste HTML-Datei zu erlangen; und
Informationen, die dem MSRP entsprechen und Informationen über einen Weg der ersten HTML-Datei angeben.

5. Verfahren nach Anspruch 2, wobei die in der Medienanforderungsnachricht getragenen Informationen über die zweite HTML-Datei umfassen: Informationen, die dem MSRP entsprechen und das anrufende Endgerät anweisen, Informationen über die zweite HTML-Datei zu erlangen; und
Informationen, die dem MSRP entsprechen und Informationen über einen Weg der zweiten HTML-Datei angeben.

6. Push-Server (50), umfassend:
eine Empfangseinheit (510), konfiguriert zum Empfangen einer durch ein anrufendes Endgerät gesandten Sitzungseinleitungsprotokoll- bzw. SIP-Anrufanforderungsnachricht;
eine Informationseinfügungseinheit (502), konfiguriert zum Hinzufügen von durch eine anrufende Partei eingestellten Informationen über eine erste Hypertext-Auszeichnungssprachen- bzw. HTML-Datei zu der SIP-Anrufanforderungsnachricht; eine Sendeeinheit (503), konfiguriert zum Senden der SIP-Anrufanforderungsnachricht an eine Dienstanrufsitzung-Steuerfunktion, SCSCF, einer angerufenen Domäne, wobei die SCSCF der angerufenen Domäne die SIP-Anrufanforderungsnachricht, die die Informationen über die erste HTML-Datei trägt, an ein angerufenes Endgerät weiterleitet;
eine Einrichtungseinheit (504), konfiguriert zum Einrichten einer MSRP-Übertragungssteuerprotokoll- bzw. -TCP-Verbindung zu dem angerufenen Endgerät gemäß einem Nachrichtensitzung-Wiederholungprotokoll, MSRP; wobei
die Empfangseinheit (501) ferner konfiguriert ist zum Empfangen einer Anforderung zum Erlangen einer ersten HTML-Datei, gesandt durch das angerufene Endgerät, und eine Erlangungseinheit (505), konfiguriert zum Erlangen einer ersten HTML-Datei gemäß den in der Anforderung zum Erlangen einer ersten HTML-Datei getragenen Informationen über die erste HTML-Datei; wobei
die Sendeeinheit (503) ferner konfiguriert ist zum Senden der ersten HTML-Datei an das angerufene Endgerät unter Verwendung der MSRP-TCP-Verbindung zu dem angerufenen Endgerät.

7. Push-Server (50) nach Anspruch 6, wobei
die Informationseinfügungseinheit ferner konfiguriert ist zum Erzeugen einer Medienanforderungsnachricht, die durch eine angerufene Partei eingestellte Informationen über die zweite HTML-Datei trägt;
die Sendeeinheit ferner konfiguriert ist zum Senden der Medienanforderungsnachricht an das anrufende Endgerät;
die Einrichtungseinheit ferner konfiguriert ist zum Einrichten einer MSRP-TCP-Verbindung zu dem anrufenden Endgerät gemäß dem MSRP;
die Empfangseinheit ferner konfiguriert ist zum Empfangen einer Anforderung zum Erlangen einer zweiten HTML-Datei, gesandt durch das anrufende Endgerät;
die Erlangungseinheit ferner konfiguriert ist zum Erlangen einer zweiten HTML-Datei gemäß den in der Anforderung zum Erlangen einer zweiten HTML-Datei getragenen Informationen über die zweite HTML-Datei; und
die Sendeeinheit ferner konfiguriert ist zum Senden der zweiten HTML-Datei an das anrufende Endgerät unter Verwendung der MSRP-TCP-Verbindung zu dem anrufenden Endgerät.

8. Push-Server nach Anspruch 7, wenn die angerufene Partei ein Freizeichenton-Teilnehmer ist, ferner umfassend eine Wiedergabeeinheit, wobei
die Einrichtungseinheit ferner konfiguriert ist zum: bevor der Push-Server die MSRP-TCP-Verbindung zu dem anrufenden Endgerät einrichtet, Einrichten eines Echtzeittransportprotokoll- bzw. RTP-Medienträgers zu dem anrufenden Endgerät;
und
die Wiedergabeeinheit konfiguriert ist zum Wiedergeben eines Audio-Freizeichentons und/oder eines Video-Freizeichentons für das anrufende Endgerät unter Verwendung des RTP-Medienträgers.

9. Push-Server nach Anspruch 6, wobei die zu der SIP-Anrufanforderungsnachricht hinzugefügten Informationen über die erste HTML-Datei umfassen: Informationen,
die dem MSRP entsprechen und das angerufene Endgerät anweisen, Informationen über die erste HTML-Datei zu erlangen; und
Informationen, die dem MSRP entsprechen und Informationen über einen Weg der ersten HTML-Datei angeben.

10. Push-Server nach Anspruch 7, wobei die in der Medienanforderungsnachricht getragenen Informationen über die zweite HTML-Datei umfassen: Informationen, die dem MSRP entsprechen und das anrufende Endgerät anweisen, Informationen über die zweite HTML-Datei zu erlangen; und
Informationen, die dem MSRP entsprechen und Informationen über einen Weg der zweiten HTML-Datei angeben.

## Revendications

1. Procédé de mise en oeuvre d'un service de poussée (de type "Push"), comprenant :
la réception (101), par un serveur de poussée, d'un message de demande d'appel au protocole d'initiation de session, SIP, envoyé par un terminal appelant, et l'ajout d'informations de premier fichier au langage de balisage hypertexte, HTML, définies par une partie appelante, au message de demande d'appel SIP ;
l'envoi (102), par le serveur de poussée, du message de demande d'appel SIP à une fonction de commande de session d'appel de service, SCSCF, d'un domaine appelé, la SCSCF du domaine appelé transférant, à un terminal appelé, le message de demande d'appel SIP transportant les informations de premier fichier HTML ;
l'établissement (103), par le serveur de poussée, d'une connexion MSRP-protocole de commande de transmission, TCP, vers le terminal appelé selon le protocole de relais de session de message, MSRP ;
la réception (104), par le serveur de poussée, d'une demande d'obtention de premier fichier HTML envoyée par le terminal appelé, et l'obtention d'un premier fichier HTML en fonction des informations de premier fichier HTML transportées dans la demande d'obtention de premier fichier HTML ; et
l'envoi (105), par le serveur de poussée, du premier fichier HTML au terminal appelé en utilisant la connexion MSRP-TCP vers le terminal appelé.

2. Procédé selon la revendication 1, lequel procédé comprend en outre :
la génération (202), par le serveur de poussée, d'un message de demande de média transportant des informations de deuxième fichier HTML définies par une partie appelée, et l'envoi du message de demande de média au terminal appelant ;
l'établissement (203), par le serveur de poussée, d'une connexion MSRP-TCP vers le terminal appelant selon le protocole MSRP ;
la réception (204), par le serveur de poussée, d'une demande d'obtention de deuxième fichier HTML envoyée par le terminal appelant, et l'obtention d'un deuxième fichier HTML en fonction des informations de deuxième fichier HTML transportées dans la demande d'obtention de deuxième fichier HTML ; et
l'envoi (205), par le serveur de poussée, du deuxième fichier HTML au terminal appelant en utilisant la connexion MSRP-TCP vers le terminal appelant.

3. Procédé selon la revendication 2, dans lequel si la partie appelée est un abonné à la tonalité de retour d'appel, avant l'établissement, par le serveur de poussée, d'une connexion MSRP-TCP vers le terminal appelant, le procédé comprend en outre :
l'établissement, par le serveur de poussée, d'un support de média au protocole de transport en temps réel, RTP, vers le terminal appelant, et la lecture d'une tonalité de retour d'appel audio et/ou d'une tonalité de retour d'appel vidéo pour le terminal appelant, en utilisant le support de média RTP.

4. Procédé selon la revendication 1, dans lequel les informations de premier fichier HTML ajoutées au message de demande d'appel SIP comprennent :
des informations conformes au protocole MSRP et qui donnent au terminal appelé l'instruction d'obtenir des informations concernant le premier fichier HTML ; et
des informations conformes au protocole MSRP et qui donnent des informations concernant un chemin du premier fichier HTML.

5. Procédé selon la revendication 2, dans lequel les informations de deuxième fichier HTML transportées dans le message de demande de média comprennent :
des informations conformes au protocole MSRP et qui donnent au terminal appelant l'instruction d'obtenir des informations concernant le deuxième fichier HTML ; et
des informations conformes au protocole MSRP et qui donnent des informations concernant un chemin du deuxième fichier HTML.

6. Serveur de poussée (50) comprenant :
une unité de réception (501), configurée pour recevoir un message de demande d'appel au protocole d'initiation de session SIP envoyé par un terminal appelant ;
une unité d'insertion d'informations (502), configurée pour ajouter des informations de premier fichier au langage de balisage hypertexte, HTML, définies par une partie appelante, au message de demande d'appel SIP ;
une unité d'envoi (503), configurée pour envoyer le message de demande d'appel SIP à une fonction de commande de session d'appel de service, SCSCF, d'un domaine appelé, la SCSCF du domaine appelé transférant, à un terminal appelé, le message de demande d'appel SIP transportant les informations de premier fichier HTML ;
une unité d'établissement (504), configurée pour établir une connexion MSRP-protocole de commande de transmission, TCP, vers le terminal appelé selon le protocole de relais de session de message, MSRP ;
l'unité de réception (501) étant en outre configurée pour recevoir une demande d'obtention de premier fichier HTML envoyée par le terminal appelé ; et
une unité d'obtention (505), configurée pour obtenir un premier fichier HTML en fonction des informations de premier fichier HTML transportées dans la demande d'obtention de premier fichier HTML ;
l'unité d'envoi (503) étant en outre configurée pour envoyer le premier fichier HTML au terminal appelé en utilisant la connexion MSRP-TCP vers le terminal appelé.

7. Serveur de poussée (50) selon la revendication 6, dans lequel
l'unité d'insertion d'informations est en outre configurée pour générer un message de demande de média transportant des informations de deuxième fichier HTML définies par une partie appelée ;
l'unité d'envoi est en outre configurée pour envoyer le message de demande de média au terminal appelant ;
l'unité d'établissement est en outre configurée pour établir une connexion MSRP-TCP vers le terminal appelant selon le protocole MSRP ;
l'unité de réception est en outre configurée pour recevoir une demande d'obtention de deuxième fichier HTML envoyée par le terminal appelant ;
l'unité d'obtention est en outre configurée pour obtenir un deuxième fichier HTML en fonction des informations de deuxième fichier HTML transportées dans la demande d'obtention de deuxième fichier HTML ; et
l'unité d'envoi est en outre configurée pour envoyer le deuxième fichier HTML au terminal appelant en utilisant la connexion MSRP-TCP vers le terminal appelant.

8. Serveur de poussée selon la revendication 7, si la partie appelée est un abonné à la tonalité de retour d'appel, comprenant en outre une unité de lecture, et dans lequel :
l'unité d'établissement est en outre configurée pour : avant que le serveur de poussée établisse la connexion MSRP-TCP vers le terminal appelant, établir un support de média au protocole de transport en temps réel, RTP, vers le terminal appelant, et
l'unité de lecture est configurée pour lire une tonalité de retour d'appel audio et/ou une tonalité de retour d'appel vidéo pour le terminal appelant, en utilisant le support de média RTP.

9. Serveur de poussée selon la revendication 6, dans lequel les informations de premier fichier HTML ajoutées au message de demande d'appel SIP comprennent :
des informations conformes au protocole MSRP et qui donnent au terminal appelé l'instruction d'obtenir des informations concernant le premier fichier HTML ; et
des informations conformes au protocole MSRP et qui donnent des informations concernant un chemin du premier fichier HTML.

10. Serveur de poussée selon la revendication 7, dans lequel les informations de deuxième fichier HTML transportées dans le message de demande de média comprennent :
des informations conformes au protocole MSRP et qui donnent au terminal appelant l'instruction d'obtenir des informations concernant le deuxième fichier HTML ; et
des informations conformes au protocole MSRP et qui donnent des informations concernant un chemin du deuxième fichier HTML.
